# EUROPÄISCHE PATENTSCHRIFT

(11) **EP 0 744 878 B1**
(45) Veröffentlichungstag und Bekanntmachung des Hinweises auf die Patenterteilung: **17.03.2004**
(21) Anmeldenummer: 95119705.2
(22) Anmeldetag: 14.12.1995
(51) Int. Cl.: H04Q 11/04

(54) **Verfahren zur Steuerung des Zugriffs auf einen Rückkanal in Breitbandverteilnetzen**
Method for controlling access to a reverse channel in broadband distribution networks
Méthode pour le contrôle d'accès à un canal de retour dans des réseaux de distribution à large bande

(30) Priorität: 20.05.1995 DE 19518570
(43) Veröffentlichungstag der Anmeldung: 27.11.1996
(73) Patentinhaber: Deutsche Telekom AG, 53113 Bonn (DE)
(72) Erfinder: Döring, Karlheinz, Dipl.-Ing., D-64297 Darmstadt (DE); Sipahi, Sena, Dipl.-Ing., D-64289 Darmstadt (DE); Roppel, Carsten, Dipl.-Ing., D-36217 Ronshausen (DE); Grimm, Karl, Josef, Dipl.-Ing, D-64839 Münster (DE)
(74) Vertreter: Gornott, Dietmar, Dipl.-Ing.

(56) Entgegenhaltungen:
- WO-A-93/06669
- WO-A-94/16534
- "COMBINED USE OF COLLISION-RESOLUTION AND COLLISION-AVOIDANCE MEDIA -ACCESS COMMUNICATION PROTOCOLS" IBM TECHNICAL DISCLOSURE BULLETIN, Bd. 37, Nr. 10, 1. Oktober 1994 (1994-10-01), Seiten 299-301, XP000475673 ISSN: 0018-8689
- MOLLENAUER J F ET AL: "CABLE-TV PROTOCOLS FOR METROPOLITAN AND REGIONAL COMMUNICATION SYSTEMS" INTERNATIONAL SYMPOSIUM ON INTERWORKING. PROCEEDINGS,1. Januar 1994 (1994-01-01), Seiten 238-249, XP000560921

## Beschreibung

Die Erfindung bezieht sich auf ein Verfahren der im Oberbegriff des Patentanspruchs 1 näher definierten Art. Ein solches Verfahren ist z. B. von C. Roppel u. a. in: Teilnehmernetz für das R1022 ATM Technology Testbed, veröffentlicht in Nachrichtentechnik, Elektronik, 3/93, Verlag Technik GmbH, Berlin, München, beschrieben.

Grundsätzlich sind zur gemeinsamen Nutzung eines Übertragungsmediums Codevielfach-, Frequenzvielfach- und Zeitvielfachverfahren bekannt, wobei Frequenz- und Codevielfach sich im Hinblick auf das Zugriffsverfahren weitgehend gleich verhalten.

Die Druckschrift IBM TECHNICAL DISCLOSURE BULLETIN, Band 37, Nr.10, Seiten 299 - 301, 01-10-1994 : COMBINED USE OF COLLISION-RESOLUTION AND COLLISION-AVOIDANCE MEDIA -ACCESS COMMUNICATION PROTOCOLS offenbart ein hybrides Zugriffsverfahren, bei dem sowohl ein kollisionsbehaftetes Verfahren (CSMA) als auch ein kollisionsfreies Verfahren, wie z.B. Polling, verwendet wird. In der Druckschrift W09306669 A wird ein Fernsehverteilnetz für interaktive Dienste beschrieben, bei dem die Kopfstation in bidirektionalen Kanälen ein adaptives Polling-Verfahren einsetzt.

In der DPA 44 07 831.5 ist ein Verfahren und eine Vorrichtung für den Zugriff auf passive Koaxialbabelnetze hinsichtlich der Frequenzzuteilung für ein Frequenzvielfach vorgeschlagen, bei dem jede Endeinrichtung sich einen freien Trägerfrequenzkanal sucht und diesen belegt. Dabei können wesentlich mehr mögliche Endeinrichtungen als Tragerfrequenzkanäle vorhanden sein, aber die Anzahl der gleichzeitig aktiven Endeinrichtungen ist beschränkt durch die Anzahl der Trägerfrequenzkanäle. Auch eine Endeinrichtung mit geringer Datenrate belegt einen Trägerfrequenzkanal für sich allein. Sind alle belegt, kann keine weitere Endeinrichtung mehr aktiv werden, auch wenn für ihre Datenrate noch die unbenutzte Teilkapazität eines schon belegten Trägerfrequenzkanals ausreichen würde.

Es sind ferner Verfahren bekannt, die im Zeitvielfach den Endeinrichtungen in gleichem Maße das Senden bei Bedarf gestatten, jedoch Signalkollisionen nicht grundsätzlich ausschließen und deshalb keinen Mindest-Durchsatz bzw. keine Begrenzung der Verzögerung garantieren (A. S. Tanenbaum: Computer Networks. Englewood Cliffs, NJ: Prentice-Hall, 1981 und D. P. Bertsekas and R. G. Gallager: Data Networks, Englewood Cliffs, NJ: Prentice-Hall, 1992, 2nd ed.).

Andere Verfahren, die im Zeitvielfach das Senden nach Bedarf gestatten und dennoch einen bestimmten Durchsatz und eine Obergrenze für die Verzögerungszeit garantieren, funktionieren nur bei niedrigen Bitraten, wobei die Bit-Dauer wesentlich länger als die Signallaufzeit von der entferntesten Endeinrichtung zur Zentrale und zurück seih muß (z. B. D-Kanal beim S0-Bus des ISDN mit 16 kbit/s entsprechend CCITT-Empfehlungen I.430 ff. und I.440 ff.).

Weitere Verfahren für hohen Durchsatz, d. h. bei denen die Symboldauer wesentlich kürzer als die Signallaufzeit ist, arbeiten im Zeitvielfach mit gezielten Sendeaufrufen für jeweils eine Endeinrichtung, wobei aber auch für momentan nicht aktive Endeinrichtung eine beträchtliche Reserve an Übertragungskapazität freigehalten wird und die nutzbare Kapazität für die anderen Endeinrichtungen schmälert (z. B. das Polling-Verfahren im R-NT2, beschrieben in C. Roppel u. a.: Teilnehmernetz für das R1022 ATM Technology Testbed, Nachrichtentechnik, Elektronik, 3/93, Verlag Technik GmbH, Berlin, München). So wäre es z. B. bei einem Film-Abruf-Dienst (Video-on-Demand) unwirtschaftlich, ständig Übertragungskapazität vom Kunden zur Zentrale in Form von reservierten Zeitabschnitten bereitzuhalten, wenn beim Abruf eines zweistündigen Filmes nur zu Beginn und ggf. am Ende Steuerbefehle zu übertragen sind.

Bei einem von mehreren Endeinrichtungen gemeinsam im Zeitvielfach genutzten passiven Übertragungsmedium können sich bei unkontrolliertem Senden die Signale der einzelnen Endeinrichtungen gegenseitig stören. Um diese Störung auf ein akzeptables Maß zu beschränken, wird der Zugriff der Endeinrichtungen auf das Medium durch eine Zentrale gesteuert. Die Endeinrichtungen dürfen nur dann in einem bestimmten Zeitabschnitt senden, wenn sie von der Zentrale dazu aufgefordert werden.

Die Endeinrichtungen können stark unterschiedliche Datenraten haben. Es gibt sowohl Endeinrichtungen mit fester wie auch solche mit variabler Datenrate, solche, die ständig senden, wie auch solche, die nur relativ selten etwas zu senden haben, und auch Endeinrichtungen, die der Zentrale noch nicht bekannt sind. Es ist weiter wünschenswert, daß das Format der Sendeaufrufe für alle genannten Arten von Endeinrichtungen dasselbe sein soll. Außerdem soll das Zugriffs-Steuerungs-Verfahren für gewisse Verbindungen eine Mindest-Übertragungskapazität (einen Mindest-Durchsatz) und/oder eine Begrenzung der Verzögerungszeit, die beim Aufbau der jeweiligen Verbindung mit der Zentrale zu vereinbaren sind, garantieren.

Der Erfindung liegt deshalb die Aufgabe zugrunde, in einem Netz mit einer Zentrale und mehreren Endeinrichtungen das (zentral gesteuerte) Senden im Zeitvielfach auf dem von mehreren Endeinrichtungen gemeinsam genutzten passiven Medium zu ermöglichen, wobei sowohl Verbindungen mit garantiertem Mindest-Durchsatz und/oder garantierter Begrenzung der Verzögerungsszeit, wie auch Verbindungen ohne derartige Anforderungen, wie auch Verbindungen von Endeinrichtungen, die der Zentrale noch nicht bekannt sind, bei hochgradiger Ausnutzung der Gesamt-Übertragungskapazität möglich sind. Es soll auch die Übertragung zeitlich variabler Datenraten ermöglicht werden. Darüber hinaus soll die Zahl der gleichzeitig bestehenden Verbindungen nicht aus Gründen der Gesamtübertragungskapazität beschränkt sein, sondern ein Aufteilen der Kapazität auf eine große Zahl von Verbindungen über viele Endeinrichtungen erlauben, wenn diese mit einem entsprechend geringen Durchsatz auskommen (dynamische Zuordnung der Übertragungskapazität).

Die Lösung dieser Aufgabe erfolgt mittels der im Kennzeichen des Patentanspruchs 1 aufgeführten Verfahrensschritte.

Eine Weiterbildung des Verfahrens ist im Kennzeichen des Patentanspruchs 2 angeführt.

Mit dem Verfahren nach der Erfindung werden auf einem gemeinsam genutzten Medium die Kanäle zu Endeinrichtungen unterschieden als "qualifizierte" Kanäle mit garantiertem Mindestdurchsatz und/oder garantierter Begrenzung der Verzögerungszeit, oder als "einfache" Kanäle ohne derartige Merkmale. Endeinrichtungen, die der Zentrale noch nicht bekannt sind, können in geregelter Weise zugreifen, wobei die letztgenannten Endeinrichtungen durch Sammelaufrufe erfaßt werden und erforderlichenfalls zunächst mittels einer "einfachen" Verbindung eine reservierte Kapazität für eine "qualifizierte" Verbindung anfordern können.

Die Erfindung wird nachstehend anhand eines Ausführungsbeispieles näher erläutert. In der zugehörigen Zeichnung zeigen die
- Fig. 1: eine Mehrpunkt-zu-Punkt Übertragung auf einem passiven Medium mit Baumstruktur und die
- Fig. 2: ein Beispiel für eine Folge von Sendeaufrufen.

Das Verfahren eignet sich für eine Mehrpunkt-zu-Punkt-Übertragung in einem System, das bereits für Punkt-zu-Mehrpunkt-Übertragung tauglich ist, d. h. auch für ein passives Übertragungsmedium, das von mehreren verschiedenen Übertragungseinrichtungen, die gleiche oder auch unterschiedliche Datenmengen und Datenraten zu übertragen haben, im selben Frequenzbereich benutzt wird.

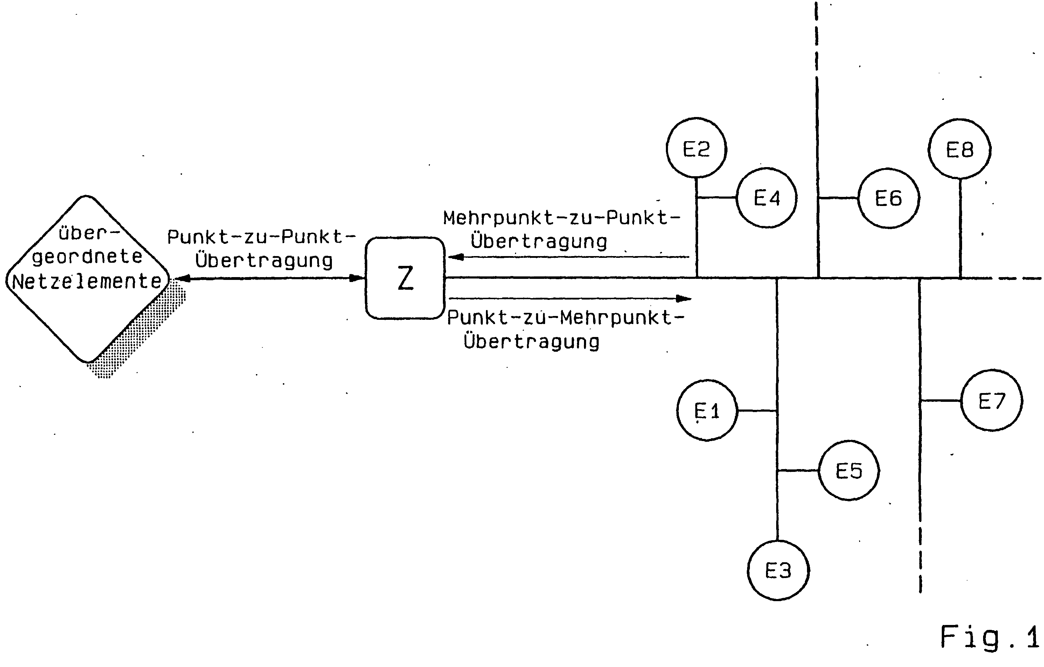

Ein typisches System, in dem das Verfahren angewandt werden kann, besteht aus einer Zentrale Z, die über ein passives, baumstrukturiertes Netz mit mehreren untergeordneten Einrichtungen, nämlich den Endeinrichtungen E1, E2, E3 usw. verbunden ist. Die Zentrale und alle Endeinrichtungen haben jeweils einen Sender und einen Empfänger. Die von der Zentrale gesendeten Signale werden von allen Endeinrichtungen empfangen d. h. "Punkt-zu-Mehrpunkt-Übertragung", die von einer Endeinrichtung gesendeten Signale werden nur von der Zentrale empfangen d. h. "Mehrpunkt-zu-Punkt-Übertragung", siehe Fig. 1.

Insbesondere eignet sich das Verfahren für einen Rückkanal im Breitbandverteilnetz entsprechend Heydel, J.: Breitbandverteildienst - Breitbandverteilnetze. telekom praxis Jg. 70 (1994), Heft 2, S. 8 - 12, das eine Baumstruktur aufweist.

Unter einer Endeinrichtung ist in diesem Zusammenhang entweder das Endgerät des Teilnehmers, wie z. B. ein Fernsehgerät mit "Set-Top-Box", oder aber der Netzabschluß zu verstehen, abhängig davon, ob der Zugriff auf das gemeinsam genutzte Medium durch das Endgerät oder den Netzabschluß erfolgt. Unter einem Rückkanal ist in diesem Zusammenhang ein physikalischer Kanal zu verstehen, der durch Zeitmultiplex in mehrere logische Rückkanäle, auch Unterkanäle genannt, für verschiedene Verbindungen unterteilt sein kann.

Bei einem zweistufigen Rückkanalkonzept nach DPA 4425 197.1 kann das Verfahren vorteilhaft im passiven Teil des Netzes eingesetzt werden.

Als Anwendungsbeispiel sei ein Breitbandverteilnetz genannt, auf dem gleichzeitig unterschiedliche interaktive Dienste laufen können. Solche Dienste könnten z. B. sein:
- Filmabruf ("Video on Demand") mit Steuerbefehlen wie "Stopp" oder "schneller Vorlauf", die zur anbietenden Zentrale zu übertragen sind, die aber nur relativ selten vorkommen, entsprechend den gelegentlichen Tastendrücken auf einer Fernbedienung.
- Tele-Video-Spiele mit relativ geringer Datenmenge in Richtung zur Zentrale, wobei aber die Spiel-Steuer-Befehle möglichst unmittelbar wirksam werden sollen und deshalb nur kurze Verzögerungszeiten bei der Übertragung zur anbietenden Zentrale zulässig sind.
- Bildfernsprechen mit relativ hoher Datenrate (auch in Richtung vom Endgerät zum vermittelnden Netz) und mit kurzen Verzögerungszeiten.

Wesentlich für die Erfindung ist, daß eine Zentrale für jeden Zeitabschnitt eine Endeinrichtung zum Senden aufruft und dazu verschiedene Arten von Aufrufen ausgibt, nämlich Einzelaufrufe und Sammelaufrufe.

Bei Verbindungen, die besondere Anforderungen hinsichtlich Durchsatz und/oder Verzögerung haben, werden die Endeinrichtungen mit Einzelaufrufen zum Senden aufgerufen. Diese haben dann in den ihnen zum Senden zugeteilten Zeitabschnitten das alleinige Senderecht und werden somit nicht durch Signalkollisionen beeinträchtigt. Die Häufigkeit der Einzelaufrufe richtet sich nach den zu Beginn der Verbindung ausgehandelten Merkmalen.

Für die übrigen Verbindungen, die ohne garantierte Werte für Durchsatz und/oder Verzögerung auskommen, werden verschiedene Klassen eingerichtet, wobei mit einem Sammelaufruf, nämlich einem Sendeaufruf für eine dieser Klassen, alle Endeinrichtungen mit einer Verbindung dieser Klasse zum Senden in dem zugehörigen Zeitabschnitt berechtigt sind, wenn sie gewisse Voraussetzungen erfüllen, die weiter unten beschrieben sind. In den Zeitabschnitten für die Klassen mit Sammelaufruf sind Kollisionen nicht ausgeschlossen, sie sind hier aber auch akzeptabel, weil die betroffenen Verbindungen ohnehin keine gegenläufigen Anforderungen gestellt haben. Die Übertragungskapazität, die für diese Klassen zur Verfügung gestellt wird, kann von der Zentrale dynamisch dem Bedarf angepaßt werden, so daß die Anzahl der Kollisionen und die Anzahl der ungenützten Zeitabschnitte ein akzeptables Maß annehmen.

Zumindest in den Zeitabschnitten, in denen mehrere Endeinrichtungen aktiv werden können, soll erkennbar sein, welche Endeinrichtung gesendet hat. Dazu müssen die Endeinrichtungen ihre Kennung zu der zu sendenden Botschaft hinzufügen.

Die Zentrale besitzt die erforderliche Intelligenz, um die Übertragung bedarfsgerecht zu steuern und die Sendeaufrufe dementsprechend abzugeben. Sie kann entsprechend den zum Senden verfügbaren Zeitabschnitten eine bestimmte Anzahl von Sendeaufrufen pro Zeiteinheit abgeben.

Die Häufigkeit der Aufrufe für Endeinrichtungen mit qualifizierten Kanälen ergibt sich zwangsläufig aus den Anforderungen der dazu gehörigen Verbindungen. Vor jeder hinzukommenden Verbindung mit qualifiziertem Kanal überprüft deshalb die Zentrale oder ein übergeordnetes Netzelement, ob noch genügend freie Kapazität dafür zu Verfügung stehen würde. Wenn ja, wird sie angenommen, andernfalls abgelehnt.

Für Endeinrichtungen mit nur "einfachen" Kanälen muß auch eine gewisse gemeinsam zu nutzende Mindestkapazität reserviert werden. Darüber hinaus kann für diese Endeinrichtungen auch die momentan übrige Kapazität, die nicht für "qualifizierte" Kanäle gebraucht wird, verwendet werden. Bei Kollisionen wiederholen die betroffenen Endeinrichtungen ihre Sendung. Die Sendung geht also nicht verloren, sondern kommt erst nach einer größeren Verzögerung an. Die Häufigkeit der Kollisionen in den Zeitabschnitten, in denen mehrere Endeinrichtungen sendeberechtigt sind, kann mit bereits bekannten Verfahren (siehe W. Stallings: Data and Computer Communications, London: Collier Macmillan, 1985 und R. J. van der Vleuten, W. C. van Etten, H. P. A. van den Boom: Optimal Controlled ALOHA for Two-Way Data Communication in a Cable Television Network. IEEE Transactions on communications, Vol. 42, No. 7, July 1994) vermindert werden. Danach werden Kollisionen auf ein vertretbares Maß reduziert, indem nach einer Kollision die Endeinrichtung vor dem nächsten Senden erst eine Anzahl von N für sie gültigen Sendeaufrufen abwartet, bevor sie sendet. N ist eine ganze Zahl aus einem Zahlenbereich von 0 bis M_{K}, die die Endeinrichtung zufallsgesteuert ermittelt.

Die Zentrale Z muß in der Lage sein, Kollisionen zu erkennen und die dadurch gestörten Botschaften zu entfernen. Außerdem müssen die Endeinrichtungen eine Rückmeldung erhalten, ob sie ihre Botschaften erfolgreich abgesetzt haben oder ob es eine Kollision gab. Deshalb müssen neben den Sendeaufrufen auch diese Rückmeldungen von der Zentrale zu den Endeinrichtungen übertragen werden.

Die Frage des Laufzeitausgleichs ist nicht Gegenstand der Erfindung, sondern es wird vorausgesetzt, daß ein passendes Verfahren, wie z. B. laufzeitabhängige Sendeverzögerungen, eingesetzt wird. Das gleiche gilt für übertragungstechnische Fragen wie z. B. Signalregeneration. Je nach eingesetzter Übertragungstechnik wird ein Kanal mit einer gewissen Gesamtkapazität geschaffen, die durch das oben beschriebene Verfahren für die verschiedenen Unterkanäle nutzbar gemacht wird.

Der mit der Erfindung erzielbare Vorteil besteht insbesondere darin, daß die Zentrale und die Endeinrichtungen nach demselben Verfahren Verbindungen mit den oben aufgeführten, völlig unterschiedlichen Anforderungen an den Übertragungskanal einrichten und betreiben können.

Im nachfolgenden Anwendungsbeispiel ist die Übertragung so organisiert, daß die Endeinrichtungen ihre Nachrichten in Form von ATM-Zellen entsprechend: ATM - Ein universelles Übermittlungsverfahren, FTZ-Nachrichten, Druckschr. 668/88 des FTZ, Darmstadt, übertragen, und zwar eine Zelle pro Zeitabschnitt und damit eine Zelle pro Sendeaufruf. In diesem Fall sind alle Zeitabschnitte gleich lang und so bemessen, daß darin jeweils die 424 Bits der Zelle (und ggf. weitere Bits für übertragungstechnische Funktionen) übertragen werden können.

Damit das Format der Sendungen in den Zeitabschnitten einheitlich wird, und damit bei allen diesen Sendungen mit demselben Verfahren erkannt werden kann, von welcher Endeinrichtung die Sendung kommt, sollte grundsätzlich zu jeder Sendung die Kennung hinzugefügt werden, auch von den Endeinrichtungen, die einzeln aufgerufen werden. Wenn erst die Zentrale die Kennungen vergibt, können Endeinrichtungen, die der Zentrale noch nicht bekannt sind, statt der Kennung eine hinreichend lange Zufallsbitfolge verwenden, auf die sich die Zentrale beziehen kann, wenn sie diese Endeinrichtung anspricht und ihr eine "richtige" Kennung zuteilt.

Wenn die Endeinrichtung fest installiert ist, wie z. B. der Netzabschluß im Fall des Breitbandverteilnetzes, kann ihr gleich bei der Installation eine eindeutige Kennung gegeben werden, die im Netz unterhalb der Zentrale nur einmal vorkommen darf.

Wenn als Endeinrichtung eine beliebig anschließbare Einheit, z. B. eine "Set-Top-Box" im Fall des Breitbandverteilnetzes, verwendet wird, ist es günstiger, wenn die Zentrale ihr nach dem Anschließen eine Kennung gibt. Diese Kennungen brauchen auch nur im Netz unterhalb der jeweiligen Zentrale gültig und eindeutig zu sein. Die verschiedenen zugleich existierenden Netze oder Teilnetze mit eigener Zentrale sind dadurch voneinander unabhängig. Es können beliebige Endeinrichtungen in beliebigen Netzen oder Teilnetzen eingesetzt werden, sofern sie nach demselben Verfahren arbeiten, und dennoch können alle Endeinrichtungen in dieser Hinsicht gleich sein, d. h. sie brauchen nicht schon im voraus, z. B. bei der Herstellung, eine eindeutige Kennung zu erhalten.

Da die Zentrale nur eine begrenzte Anzahl von Endeinrichtungen bedienen muß, braucht sie auch nur eine begrenzte Anzahl von Kennungen zu verwalten. Dadurch können die Kennungen relativ kurz (wenige Bits) sein, und der Overhead für die Kennungen kann in akzeptablen Grenzen gehalten werden. Wenn stattdessen global gültige Kennungen verwendet würden, müßten diese Kennungen so lang sein, d. h. so viele Bits umfassen, daß damit alle, auch denkbare zukünftige Endeinrichtungen, eindeutig identifizierbar wären.

Die zufällige Anzahl N von für sie gültigen Sendeaufrufen, die eine Endeinrichtung nach einer Kollision ungenützt lassen muß, wird aus dem Zahlenbereich von 0 bis M_{K} genommen. M_{K} kann für jede Aufrufklasse K gesondert von der Zentrale nach Bedarf gesteuert und den Endeinrichtungen mitgeteilt werden. Im Zusammenhang mit der Häufigkeit der Aufrufe für eine Klasse K kann dadurch die Zentrale die Wahrscheinlichkeit von Kollisionen steuern, indem die Sendeversuche über einen größeren Bereich von Zeitabschnitten verteilt werden. Durch diese Maßnahme wird zwar der Durchsatz der einzelnen Endeinrichtungen reduziert, aber andernfalls könnte durch zu viele Kollisionen der Kanal für die betrachtete Klasse K völlig blockiert werden.

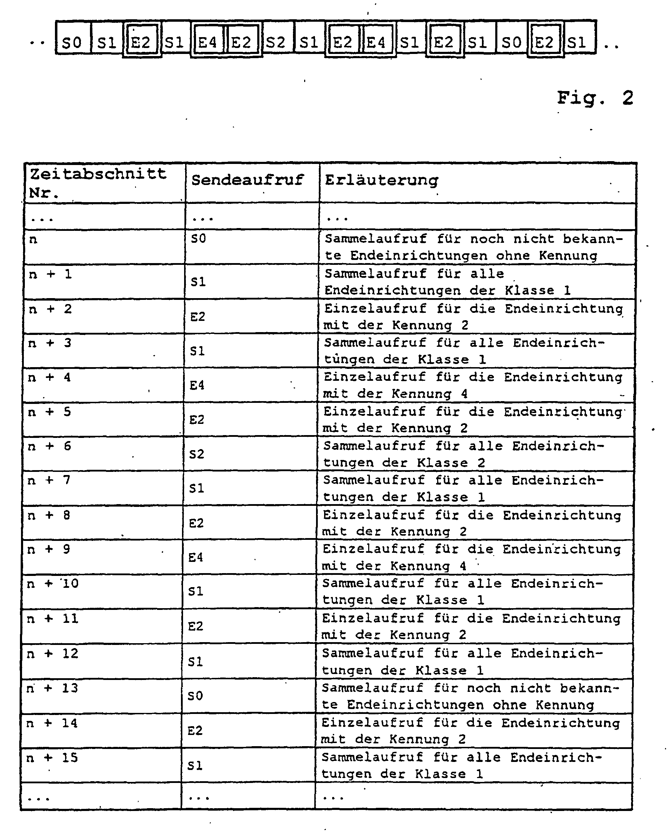

Ein Beispiel für eine Folge von Sendeaufrufen zeigt Fig. 2.

Für dieses Beispiel wurde folgendes angenommen:
- Allgemein gültig sei, daß mit dem Sammelaufruf "S0" alle Endeinrichtungen, die der Zentrale noch nicht bekannt sind, aufgerufen werden. Es sind die neu hinzukommenden Endeinrichtungen, die noch keine Kennung haben.
- Eine der Endeinrichtungen benötigt für eine qualifizierte Verbindung ein Drittel der Gesamtkapazität. Die Zentrale habe ihr die Kennung 2 und entsprechend ihrem Bedarf 1/3 der Gesamtkapazität für eine qualifizierte Verbindung zugeteilt. Sie wird - entsprechend häufig - mit dem Einzelaufruf "E2" aufgerufen.
- Einer anderen Endeinrichtung, die auch eine qualifizierte Verbindung, aber mit niedriger Bitrate, benötige, habe die Zentrale die Kennung 4 zugeteilt. Sie wird - relativ selten - mit dem Einzelaufruf "E4" aufgerufen.
- Drei weiteren Endeinrichtungen, die zwar einen hohen Durchsatz liefern können, aber keine qualifizierten Verbindungen benötigen, habe die Zentrale die Kennungen 3, 5 und 6 zugeteilt. Sie seien zu einer Klasse 1 zusammengefaßt, worden und werden - relativ häufig - mit dem Sammelaufruf " S1" aufgerufen.
- Fünf weiteren Endeinrichtungen, die nur sehr selten etwas zu senden haben und auch keine qualifizierte Verbindung benötigen, habe die Zentrale die Kennungen 7, 8, 15, 19 und 26 zugeteilt. Sie seien zu einer Klasse 2 zusammengefaßt und werden - relativ selten - mit dem Sammelaufruf "S2" aufgerufen.

## Patentansprüche

1. Verfahren zur Steuerung des Zugriffs auf einen im Zeitvielfach von mehreren Endeinrichtungen (E1,...,E8) benutzten Rückkanal in Breitbandverteilnetzen mit gezielten Sendeaufrufen durch eine Zentrale (Z),
**dadurch gekennzeichnet, daß**
- die Sendeaufrufe einheitlichen Formats der Zentrale (Z) mit Unterscheidungsmerkmalen für einerseits qualifizierte Unterkanäle mit garantierten Werten für Durchsatz und/oder Verzögerung als Einzelaufrufe und für andererseits einfache Unterkanäle ohne derartige garantierte Werte als Sammelaufrufe versehen werden,
- daß von der Zentrale (Z) eine bedarfsgerecht wechselnde Folge von Einzel- und Sammelaufrufen zu den Endeinrichtungen gesendet wird,
- daß durch jeden Einzelaufruf genau einer Endeinrichtung ein Zeitabschnitt zum alleinigen Senden zur Verfügung gestellt wird und
- daß durch jeden Sammelaufruf mehreren Endeinrichtungen gemeinsam ein Zeitabschnitt zum Senden zur Verfügung gestellt wird.

2. Verfahren nach Anspruch 1, **dadurch gekennzeichnet, daß** von der Zentrale (Z) neu hinzukommende Endeinrichtungen und solche Endeinrichtungen, die einen neuen Verbindungswunsch an die Zentrale (Z) melden, zuerst mit einem besonderen Sammelaufruf gerufen werden, um die Bedingungen für die weiteren Aufrufe auszuhandeln.

## Claims

1. Method for controlling access to a return channel used in time multiple by a plurality of terminal devices (E1, .., E8) in broadband distribution networks with targeted transmit calls by a central station (Z),
**characterized in that**
- the transmit calls of uniform format of the central station (Z) are provided with distinguishing features for, on the one hand, qualified subchannels with guaranteed values for throughput and/or delay as individual calls and for, on the other hand, simple subchannels without such guaranteed values as group calls;
- the central station (Z) transmits a sequence, alternating according to demand, of individual and group calls to the terminal devices;
- through each individual call a time portion for exclusive transmission is made available to precisely one terminal device and
- through each group call a time portion for transmission is made available jointly to a plurality of terminal devices.

2. Method according to claim 1, **characterized in that**
newly added terminal devices and those terminal devices reporting a new connection request to the central station (Z) are first called by the central station (Z) with a special group call in order to negotiate the conditions for the further calls.

## Revendications

1. Procédé de pilotage de l'accès à un canal de retour utilisé en multiplexage temporel par plusieurs équipements terminaux (E1, ..., E8) dans des réseaux de distribution à large bande avec ordres d'émission ciblés provenant d'un service central (Z),
**caractérisé en ce que**
- les ordres d'émission de format unique provenant du service central (Z) sont dotés de caractéristiques de différenciation d'une part pour des sous-canaux qualifiés avec valeurs garanties de débit et/ou de délai pour ordres individuels et d'autre part pour des sous-canaux simples sans valeurs garanties pour ordres regroupés,
- le service central (Z) émet vers les équipements terminaux une séquence variant selon les besoins d'ordres individuels et regroupés,
- pour chaque ordre individuel, une fenêtre de temps est attribuée à un seul équipement terminal, qui en dispose exclusivement pour l'émission,
- pour chaque ordre regroupé, une fenêtre de temps est attribuée à plusieurs équipements terminaux, qui en disposent conjointèment pour l'émission.

2. Procédé selon la revendication 1, **caractérisé en ce que** le service central (Z) lance tout d'abord un ordre regroupé spécial aux nouveaux équipements terminaux et aux équipements terminaux qui adressent au service central (Z) une nouvelle demande de liaison, afin de négocier les conditions des ordres ultérieurs.
